(19) Europäisches Patentamt
European Patent Office
Office européen des brevets

(11) Numéro de publication : **0 246 168 B1**

(12) # FASCICULE DE BREVET EUROPEEN

(45) Date de publication du fascicule du brevet :
**16.10.91 Bulletin 91/42**

(51) Int. Cl.⁵ : **G06F 3/06, G06F 13/40**

(21) Numéro de dépôt : **87401108.3**

(22) Date de dépôt : **15.05.87**

---

(54) **Dispositif intercalaire de connexion indépendante à un ensemble informatique d'unités de mémoire auxiliaire.**

---

(30) Priorité : **15.05.86 FR 8607000**

(43) Date de publication de la demande :
**19.11.87 Bulletin 87/47**

(45) Mention de la délivrance du brevet :
**16.10.91 Bulletin 91/42**

(84) Etats contractants désignés :
**AT BE CH DE ES FR GB GR IT LI LU NL SE**

(56) Documents cités :
**US-A- 4 007 448**
**ELECTRONIC DESIGN, vol. 31, no. 17, août 1983, pages 217-221, Waseca, MN, Denville, NJ, US; N. ZIMMERMAN et al.: "New interface gives a boost to 5 1/4-in. Winchesters"**
**ELECTRONIC DESIGN, vol. 32, no. 23, novembre 1984, pages 271-274,276,278,280, Waseca, MN, Denville, NJ, US; C.F. CZERNEK: "Highest-capacity 8-in. drive presents choice of interfaces"**

(73) Titulaire : **COPERNIQUE**
**108, avenue Jean Moulin**
**F-78170 La Celle St. Cloud (FR)**

(72) Inventeur : **Guiffant,Yves**
**1 Avenue Jean Perrin**
**F-92260 Fontenay-aux-Roses (FR)**
Inventeur : **Bourdon,Claude**
**12 Les Chateaux Bruloir**
**F-95000 Cergy (FR)**
Inventeur : **Nestrallet,Michel**
**7 Rue des Acacias**
**F-91430 Igny (FR)**

(74) Mandataire : **Derambure, Christian**
**BUGNION ASSOCIES 55, rue Boissonade**
**F-75014 Paris (FR)**

EP 0 246 168 B1

---

EP 0 246 168 B1

## Description

L'invention concerne un dispositif intercalaire de connexion d'unités de mémoire auxiliaire à un ensemble informatique.

On connaît déjà différents types d'interfaces pour unités de mémoire auxiliaire. Ces interfaces connus comportent en général un câble A de commande, et un câble B à haute vitesse de transmission, pour chaque unité de mémoire. Le câble A de commande véhicule les informations nécessaires à la gestion et au fonctionnement de l'unité de mémoire, et le câble B véhicule essentiellement les données et informations rapides.

On connaît deux types d'interfaces permettant de relier un ensemble informatique donné à une pluralité d'unités de mémoire auxiliaire : un type d'interface dit chaîné (ou "DAISY CHAINED") et un type d'interfaces dit en étoile (ou "STAR").

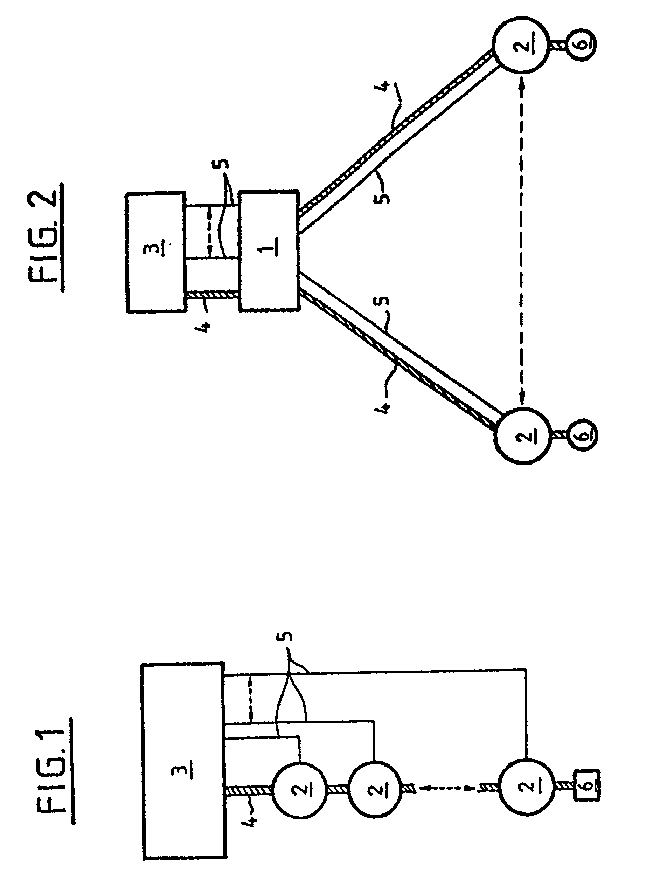

La présente invention ne concerne pas les interfaces du type en étoile pour lesquelles chaque unité de mémoire est reliée à l'ensemble informatique directement et indépendamment les unes des autres par un câble A de commande qui lui est propre et par un câble B à haute vitesse de transmission qui lui est propre. Lorsque l'interface est du type chaîné, il ne comporte qu'un seul câble A de commande pour toutes les unités de mémoire, ce câble A reliant l'ensemble informatique à une première unité de mémoire, et les autres unités les unes aux autres en chaîne jusqu'à la dernière qui comporte un dispositif de terminaison dit "terminateur". Les unités de mémoire sont donc montées en série vis-à-vis du câble A de commande. Par contre, chaque unité de mémoire est reliée à l'ensemble informatique directement par un câble B à haute vitesse de transmission qui lui est propre. La publication Electronic Design, Vol. 31, août 1983, n° 17, page 221 figure 2, Waseca, MN, Denville, NJ, US ; N. Zimmerman et Al. : "New Interface gives a boost to 5 1/4-in. Winchesters" illustre un tel type d'interface chaîné. Les interfaces chaînés connus donnent satisfaction, et ont comme avantage de simplifier les connexions à l'ensemble informatique, notamment en ne nécessitant qu'un contrôleur pour une pluralité d'unités de mémoire.

Cependant, ils ont pour inconvénient majeur qu'on ne peut pas interrompre et déconnecter une unité de mémoire de la chaîne sans perturber le fonctionnement des autres unités. En effet, lorsque l'on déconnecte une unité, on coupe le câble A de commande. Il est donc nécessaire que toutes les unités soient préalablement interrompues. La maintenance et le test des unités de mémoire sont donc difficiles à réaliser et perturbent le fonctionnement de toutes les unités de mémoire, donc de l'ensemble informatique, de façon exagérée.

L'invention vise à pallier ces inconvénients et propose un dispositif connecté entre un ensemble informatique et des unités de mémoires auxiliaires permettant de relier ces unités de mémoires à l'ensemble informatique, notamment à au moins un contrôleur d'unités de cet ensemble informatique, qui présente au moins un interface chaîné comprenant un câble A de commande et un nombre de câbles B à haute vitesse de transmission de données égale au nombre d'unités susceptibles d'être connectés à un même interface chaîné, caractérisé en ce qu'il est connecté à l'ensemble informatique, notamment à un contrôleur, par ledit interface chaîné comprenant ledit câble A et lesdits câbles B, en ce que chaque unité de mémoires auxiliaires est reliée au dispositif par un câble A de commande et un câble B de données propres à cette unité, et en ce qu'il comporte des moyens logiques pour déconnecter ou connecter électriquement de ou à l'ensemble informatique chaque unité de mémoire auxiliaire physiquement reliée au dispositif, sans perturber le fonctionnement des autres unités de mémoires auxiliaires, notamment de celles reliées au même contrôleur.

Le dispositif selon l'invention comporte des moyens pour tester en ligne une unité de mémoire auxiliaire sans perturber le fonctionnement des autres unités de mémoire ; des moyens de transformation du câble A de commande unique en provenance de l'ensemble informatique en une pluralité de câbles A de commande destinés respectivement à chaque unité de mémoire auxiliaire, qui est alors connectée en étoile directement au dispositif selon l'invention par un câble A de commande qui lui est propre et par un câble B à haute vitesse de transmission qui lui est propre. Le dispositif selon l'invention est transparent pour les câbles B à haute vitesse de transmission.

Le dispositif selon l'invention permet de transformer l'interface du type chaîné d'un contrôleur de l'ensemble informatique 'qui comporte un câble A de commande et plusieurs câbles B à haute vitesse de transmission, en un interface en étoile pour lequel chaque unité est connectée indépendamment des autres. Un système en étoile en soi est connu de US-A-3 221 307.

Un ensemble informatique comportant un dispositif selon l'invention a donc tous les avantages procurés par l'interface chaîné (plusieurs unités par contrôleur, logique d'accès simplifié, utilisation de contrôleurs standards à mémoire intercalaire d'accès rapide...) sans en avoir les inconvénients, puisque chaque unité peut être interrompue, déconnectée et testée sans perturbation du fonctionnement des autres unités connectées au même contrôleur.

Un dispositif selon l'invention autorise, par ailleurs, l'utilisation en double accès des unités de mémoire auxiliaire.

2

En fonctionnement normal, un dispositif selon l'invention est transparent pour l'ensemble informatique qui accède aux unités de mémoire comme si elles étaient normalement connectées en chaîne.

L'invention sera mieux comprise à la lecture de la description suivante d'un de ses modes de réalisation préférentiels, qui se réfère aux figures annexées dans lesquelles :

– La figure 1 est une vue schématique illustrant le mode de connexion d'unités de mémoire auxiliaire à un ensemble informatique via un interface du type chaîné de l'état de la technique, sans utilisation d'un dispositif selon l'invention.

– La figure 2 est une vue schématique illustrant le mode de connexion d'unités de mémoire auxiliaire à un ensemble informatique via un dispositif selon l'invention.

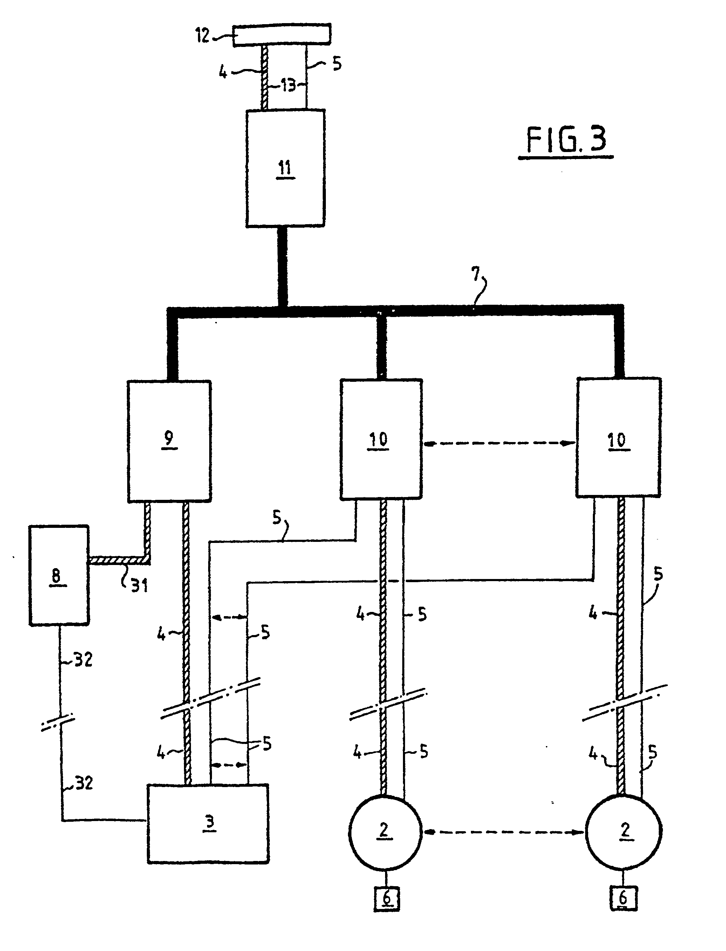

– La figure 3 est une vue schématique illustrant les différentes parties constitutives d'un dispositif selon l'invention.

– La figure 4 est une vue synoptique de l'état des voyants d'une carte de multiplexage d'unité de mémoire d'un dispositif selon l'invention selon les actions de l'opérateur.

La figure 1 illustre un mode de connexion de l'art antérieur d'unités (2) de mémoire auxiliaire dans une configuration du type chaîné à un ensemble informatique, et plus précisément à au moins un contrôleur (3) d'unités de mémoire auxiliaire de cet ensemble informatique. L'interface entre le contrôleur (3), et les unités (2) de mémoire est du type chaîné, et comporte un câble A de commande (4), et une pluralité de câbles B à haute vitesse de transmission (5). Le nombre de câbles B (5) est égal au nombre d'unités (2) de mémoire puisque chacun de ces câbles B (5) est propre à une unité (2) de mémoire. Un terminateur (6) est prévu à l'extrémité libre du câble A de commande (4) après la dernière unité (2) de mémoire.

En pratique, les unités (2) de mémoire auxiliaire sont par exemple à disques magnétiques ou optiques, durs ou souples, fixes ou amovibles, ou à bandes magnétiques, ou autres. Dans le cas des disques magnétiques durs, l'interface est du type soixante points standard ou soixante-quinze points multiplexés. Dans le premier cas, le câble A de commande (4) comporte soixante points de connexion, et le câble B a haute vitesse de transmission (5) comporte vingt-six points. Dans le second cas le câble A de commande (4) comporte soixante-quinze points, et la câble B à haute vitesse de transmission (5) comporte trente-quatre points.

On supposera dans la suite à titre d'exemple que l'interface est du type soixante points standard, mais l'invention pourra être aisément adaptée à d'autres types d'interfaces, notamment soixante-quinze points multiplexés.

Le contrôleur (3) est avantageusement un contrôleur à mémoire intercalaire tel que décrit dans le brevet français 80 14929, permettant des accès rapides aux unités (2) de mémoire auxiliaire, par exemple un DIRAM (marque déposée) ou un DORSAL (marque déposée).

Comme celà apparaît de la figure 1, la configuration chaînée de l'art antérieur n'autorise pas la déconnexion d'une unité (2) de mémoire indépendamment des autres, c'est-à-dire sans perturbation du fonctionnement des autres unités (2) de mémoire.

Un dispositif (1) (figure 2) selon l'invention intercalaire de connexion d'unités (2) de mémoire auxiliaire à un ensemble informatique comporte des moyens pour déconnecter/connecter chaque unité (2) de mémoire auxiliaire de/à l'ensemble informatique sans perturber les fonctionnements des autres unités (2) de mémoire auxiliaire.

Un dispositif (1) selon l'invention comporte des moyens de transformation du câble A de commande (4) unique en provenance de l'ensemble informatique en une pluralité de câbles A de commande (4) destinés respectivement à chaque unité (2) de mémoire auxiliaire. De plus, un dispositif (1) selon l'invention est transparent pour les informations transmises par les câbles B à haute vitesse de transmission que ce soit de l'ensemble informatique vers chaque unité 2 de mémoire ou inversement de chaque unité (2) de mémoire vers l'ensemble informatique. En effet, le codage des informations circulant sur les câbles B à haute vitesse de transmission est le même pour l'ensemble informatique (notamment pour les contrôleurs (3) d'unités de mémoire auxiliaire) et pour les unités (2) de mémoire. Les valeurs de ces informations n'ont donc pas à être modifiées dans un dispositif (1) selon l'invention. On prévoit cependant avantageusement des moyens de resynchronisation des informations entre les câbles B(5) des unités (2) de mémoire et ceux du contrôleur (3) de l'ensemble informatique. La resynchronisation se fera sur un signal d'horloge du contrôleur (3) correspondant, ou de l'unité (2) de mémoire ou propre au dispositif (1) selon l'invention, selon les cas. De tels moyens de resynchronisation sont déjà connus de l'art antérieur et ne seront pas davantage décrits ci-après. Ainsi, chacune des unités (2) mémoire auxiliaire est connectée en étoile directement au dispositif (1) selon l'invention par un câble A de commande (4) qui lui est propre, et par un câble B à haute vitesse de transmission (5) qui lui est propre.

On a représenté en figure 2, deux unités (2) de mémoire connectées à un dispositif selon l'invention. Il est clair que plusieurs autres unités (2) peuvent être connectées à volonté (flèches pointillées), et dans ce cas on prévoira autant de câbles B à haute vitesse de transmission (5) entre le dispositif (1) et le contrôleur (3). Pour des raisons d'ordre technologique (longueur maximum des câbles, adaptation électrique, numéros d'unités sur quatre bits seulement...) le nombre d'unités (2) de mémoire auxiliaire que l'on peut connecter à un contrôleur (3) via un dispositif (1) selon l'invention est limité. Ce nombre maximum est en pratique généralement de seize.

Une tresse de masse (non représentée) relie également chaque unité (2) de mémoire au dispositif (1) selon l'invention, et le dispositif (1) au contrôleur (3), de façon connue en soi.

A chaque unité (2) de mémoire auxiliaire est associé un terminateur (6) qui boucle l'extrémité du câble A de commande (4) correspondant.

Un dispositif (1) selon l'invention comporte avantageusement des moyens permettant de le télécommander à partir du contrôleur (3), ou de télécommander d'autres dispositifs.

Le dispositif (1) selon l'invention peut être utilisé en double accès. Dans ce cas chaque unité (2) de mémoire est reliée par des câbles propres A de commande (4) et B à haute vitesse de transmission (5) à deux dispositifs (1) selon l'invention ,chacun d'eux étant relié à un contrôleur (3), selon la même configuration que précédemment (figure 2). Chaque unité (2) de mémoire est connectée par deux câbles A de commande (4) et deux câbles B à haute vitesse de transmission (5), et comporte donc deux terminateurs (6), un par câble A (4). Chaque dispositif (1) est relié à un contrôleur (3) par un câble A de commande (4) et des câbles B à haute vitesse de transmission en nombre correspondant au nombre d'unités (2).

Un dispositif (1) selon l'invention comporte avantageusement des moyens (11) pour connecter/ déconnecter au moins une unité (2) de mémoire auxiliaire sur au moins un canal indépendant (13) sans perturber les fonctionnements des autres unités (2) de mémoire. Les moyens pour déconnecter/connecter chaque unité de mémoire de/à l'ensemble informatique et/ou les moyens pour connecter/ déconnecter au moins une unité (2) de mémoire sur au moins un canal indépendant (13) sont des moyens logiques de déconnexion/connexion actifs lorsque l'unité (2) de mémoire est physiquement connectée au dispositif (1) selon l'invention. Dans le mode de réalisation préférentiel, on prévoit un seul canal indépendant (13). De ce fait, une seule unité (2) de mémoire pourra être connectée à un instant donné sur ce canal indépendant B.

On va maintenant décrire plus en détail comment peut être réalisé un dispositif (1) selon l'invention, tel que représenté en figure (3), sur laquelle on a représenté deux unités (2) de mémoire auxiliaire, à titre d'exemple, connectées en simple accès.

Le dispositif (1) selon l'invention comporte un bus (7) de fond de panier véhiculant l'ensemble des informations ; une carte de commande (8) qui permet la commande (manuelle ou automatique par télécommande à partir du contrôleur (3)) du dispositif (1) ; une carte de multiplexage (9) du bus (7) de fond de panier qui gère les informations véhiculées par ce bus (7) ; et une carte de multiplexage (10) par unité (2) de mémoire auxiliaire qui gère la liaison entre cette unité (2) de mémoire et le bus (7) de fond de panier, ainsi que la connexion transparente mais synchronisée des câbles B à haute vitesse de transmission (5).

En option, une carte (11) de connexion indépendante permet de connecter/déconnecter une unité (2) de mémoire sur un canal indépendant (13) associé à des moyens de test ou à autre contrôleur (12). Un dispositif (1) selon l'invention permet ainsi de tester une unité (2) de mémoire dans ses conditions réelles de fonctionnement.

Le câble A de commande (4) du contrôleur (3) de l'ensemble informatique est connecté directement à la carte (9) de multiplexage de bus. Les câbles B à haute vitesse de transmission (5) du contrôleur (3) sont connectés directement aux cartes (10) de multiplexage d'unité respectives.

La carte de commande (8) comporte des voyants lumineux visibles en permanence destinés à délivrer diverses informations à l'utilisateur :

– Un voyant d'erreur activé par un signal ERREUR quand une des cartes connectées au bus (7) de fond de panier a détecté un défaut de tension d'alimentation.

– Un voyant d'attention qui peut avoir trois états, selon un signal ATTENT :

. éteint dans le cas normal

. clignotant si une des unités connectées est en faute

. allumé si deux unités (2) portent le même numéro et ont été sélectionnées ensemble.

– Un voyant par unité (2) de mémoire donnant l'activité de cette unité (2) de mémoire. Ce voyant est allumé lorsque l'unité (2) de mémoire effectue une lecture, ou une écriture, ou un positionnement.

– Un voyant de marche qui indique l'état de l'alimentation électrique générale en fonction d'un signal MARCHE.

Les signaux ERREUR, ATTENT, MARCHE, précités sont gérés par la carte (9) de multiplexage du bus.

La carte de commande (8) comporte également des moyens interrupteurs à trois fonctions permettant la mise en marche du dispositif (1), son arrêt, ou sa télécommande.

Lors de la mise en marche du dispositif (1), celui-ci est mis sous tension par un signal ON qui, par exemple, est passé au niveau logique zéro alors qu'il était à 1. Le signal RESET de réinitialisation du dispositif (1) est alors rendu actif pendant un certain temps, de l'ordre de deux secondes par exemple, et est émis vers la carte (9) de multiplexage de bus. Les voyants visibles en permanence sont allumés tant que dure le signal RESET.

Des moyens interrupteurs, tels qu'un poussoir P1 permettent d'émettre manuellement le signal RESET.

Les moyens d'alimentation fournissent des tensions continues de l'ordre de -12V, -5V, 0V, +5V et +12V. Les émetteurs/récepteurs d'interface sont alimentés par le -5V et +5V. A la mise en marche, le signal RESET invalide les émetteurs/récepteurs d'interface (par coupure d'alimentation) dont l'interrupteur de la carte (8) de commande est en position déconnectée. Ainsi, le dispositif est dans l'état où il se trouvait lors de son arrêt. Le signal ERREUR est émis lorsqu'une des tensions est défaillante.

La carte (8) de commande comporte également deux interrupteurs poussoirs P4 et P2, un interrupteur à deux positions par carte (10) de multiplexage d'unité (2) de mémoire (en pratique donc 16 interrupteurs), et au moins une roue codeuse, qui constituent des moyens de connexion/déconnexion logique des unités (2) de mémoire.

La procédure permettant de déconnecter une unité (2) de mémoire donnée est la suivante :
– affichage du numéro de l'unité (2) de mémoire sur la roue codeuse;
– actionnement du poussoir de reconnaissance P4. Si l'unité (2) a été sélectionnée au moins une fois, un voyant de reconnaissance de la carte (10) de multiplexage associée à cette unité (2) va s'allumer. L'opérateur repère alors le numéro de la carte (10) correspondante de multiplexage d'unité;
– actionnement sur la carte (8) de commande de l'interrupteur correspondant à la carte (10) de multiplexage d'unité repérée pour le faire passer de la position "unité connectée" à la position "unité déconnectée". Un voyant de reconnaissance de l'interrupteur doit alors s'allumer sur la carte (10) de multiplexage concernée, ce qui permet à l'opérateur de s'assurer qu'il a agit sur le bon interrupteur;
– actionnement du poussoir d'action P2 qui déclenche la déconnexion effective de l'unité (2) de mémoire en coupant l'alimentation électrique des circuits émetteurs/récepteurs des câbles d'interface (4) et (5) de la carte (10) de multiplexage associée. Ces câbles peuvent alors être physiquement débranchés de la carte (10) de multiplexage d'unité.

Le poussoir de reconnaissance P4 et la roue codeuse de la carte (8) de commande constituent des moyens de reconnaissance de la carte (10) de multiplexage physiquement associée à une unité (2) donnée. L'utilisateur pourra donc agir sur l'interrupteur à deux positions de la carte (10) de multiplexage effectivement associée à l'unité (2) concernée.

Quand une unité (2) de mémoire est sélectionnée par l'ensemble informatique via le dispositif (1) selon l'invention, son numéro est mémorisé dans un registre de la carte (10) de multiplexage d'unité à laquelle elle est physiquement connectée. L'action sur le poussoir P4 permet d'émettre le signal LOG sur le bus (7) de fond de panier, qui valide le bus NUM0, NUM1, NUM2, NUM3 codant le numéro d'unité, chaque carte (10) de multiplexage d'unité compare alors le numéro d'unité qu'elle a mémorisé au numéro du bus NUM, et la carte (10) pour laquelle ces deux numéros sont identiques émet un signal de reconnaissance qui déclenche un voyant lumineux (18). Lorsqu'on actionne ensuite un des interrupteurs à deux positions, le numéro de la carte (10) de multiplexage correspondant est alors codé sur le bus NUM0 à NUM3 par la carte (9) de multiplexage de bus qui émet également le signal DISC indiquant qu'un interrupteur a été basculé. La carte (10) de multiplexage concernée se reconnait alors en émettant un signal validant un voyant lumineux (17) de reconnaissance de l'interrupteur, et la déconnexion sur cette carte (10) peut être validée par le signal POUS émis par le poussoir d'action P2. Si l'unité (2) n'a jamais été sélectionnée, aucune carte (10) de multiplexage ne se reconnaît par l'action du poussoir P4 de la carte (8) de commande. Dans ce cas, l'utilisateur devra soit sélectionner cette unité (2) au moins une fois à partir de l'ensemble informatique, soit déterminer manuellement (en suivant le câblage) quelle est la carte (10) de multiplexage physiquement associée à l'unité (2).

Pour connecter une unité (2) de mémoire, on applique la procédure exactement inverse:action sur l'interrupteur de la carte (8) de commande correspondant à la carte (10) de multiplexage correspondant, et après reconnaissance, action sur le poussoir P2 qui rétablit l'alimentation électrique des circuits émetteurs/récepteurs des câbles d'interface (4) et (5) de la carte (10) de multiplexage.

Des moyens interrupteurs poussoir P3 de la carte de commande 8 permettent de remettre à zéro des bascules des cartes (9, 10) de multiplexage qui mémorisent le passage en faute d'une unité (2) de mémoire.

La carte (9)de multiplexage de bus comporte les voyants lumineux suivants :
– lecture ou écriture
– positionnement
– erreur de tension d'alimentation
– unité sélectionnée

Chaque carte (10) de multiplexage d'unité comporte les voyants lumineux suivants :
– unité sélectionnée
– unité sélectionnée au moins une fois
– faute mémorisée sur l'unité
– erreur de tension d'alimentation

— (14) clignotant interdisant le débranchement physique des câbles

— (15) connexion indépendante sur la carte (11) de connexion indépendante

— (16)déconnexion logique effectuée

— (17) reconnaissance de l'interrupteur de déconnexion actionné

— (18) reconnaissance de l'unité (2) dont le numéro est affiché sur la roue codeuse de la carte de commande (8)

La carte (11) de connexion indépendante comporte au moins une roue codeuse et un interrupteur poussoir P6 d'actionnement qui déclenche la connexion de l'unité (2) associée à la carte (10) de multiplexage d'unité dont le numéro est affiché sur la roue codeuse, sur le canal indépendant (13) associé à cette carte (11) de connexion indépendante.

Ainsi, lorsqu'une unité (2) de mémoire a été déconnectée logiquement du contrôleur (3), on peut la connecter sur le canal indépendant (13), (moyens de test ou autre contrôleur (12)) par la procédure suivante :

— affichage du numéro de la carte (10) de multiplexage d'unité correspondant sur la roue codeuse de la carte (11) de connexion indépendante. Si cette carte (10) de multiplexage d'unité est logiquement déconnectée du canal normal, le voyant (15) de connexion indépendante de cette carte (10) s'allume, indiquant qu'elle peut être placée sur le canal indépendant (13).

— actionnement de l'interrupteur poussoir P6 qui active à nouveau les émetteurs/récepteurs de la carte (10) de multiplexage d'unité, dont le voyant (16) de connexion s'éteint. Un nouvel actionnement sur cet interrupteur poussoir P6 déconnecte à nouveau logiquement la carte (10) de multiplexage d'unité.

Le bus NUMV0 à NUMV3 véhicule le numéro de la carte (10) de multiplexage codé sur la roue codeuse de la carte (11) de connexion indépendendante. La connexion et la déconnexion logiques de la carte (10) de multiplexage sont validées par le signal POUSV du poussoir d'action P6. De préférence, la roue codeuse de la carte (11) de connexion indépendante n'a d'influence que lorsqu'aucune unité (2) n'est déjà connectée sur ce canal indépendant (13). En effet, dans le mode de réalisation préférentiel, une seule unité (2) peut être connectée sur ce canal indépendant (13), et lorsque c'est le cas effectivement, la roue codeuse (et donc le bus NUMV) devient inactive. Toute action sur le poussoir d'action P6 a alors pour effet de déconnecter du canal indépendant (13) l'unité (2) qui y était connectée.

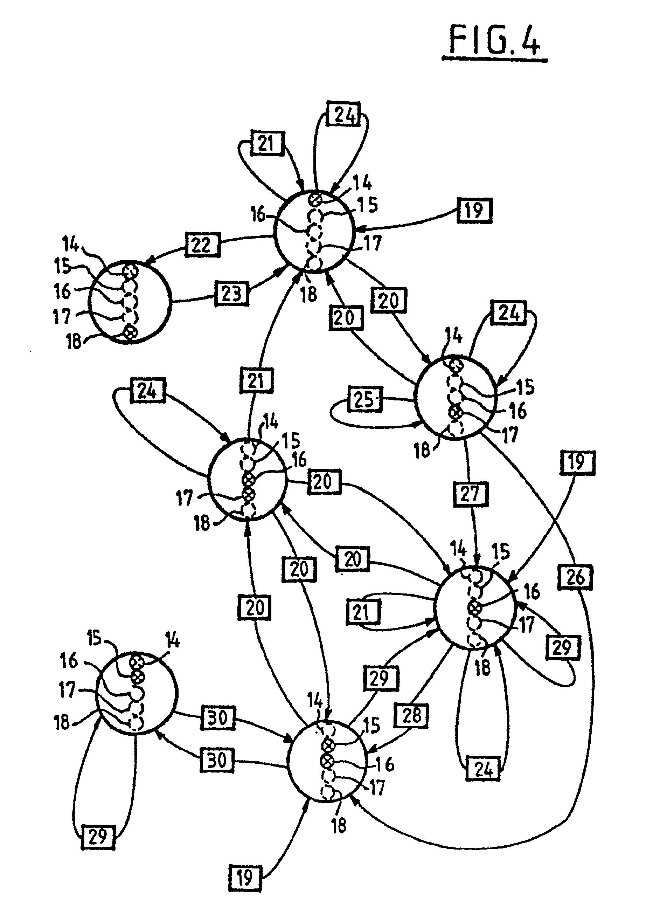

La figure 4 montre l'état des voyants (14) clignotant (croix pointillée) interdisant le débranchement; (15) de connexion indépendante; (16) de déconnexion; (18) de reconnaissance de l'unité (2); (17) de reconnaissance de l'interrupteur de déconnexion actionné, en fonction des actions effectuées par l'utilisateur. le tableau 1 explicite les références 19 à 30 de ces actions. Sur la figure 4, une croix indiquée dans le voyant signifie que celui-ci est allumé.

Lorsqu'une unité (2) est connectée sur le canal normal des cartes (8) et (9) de commande et de multiplexage de bus accédant au contrôleur (3), une tentative de connexion sur le canal indépendant (13) par la carte (11) de connexion indépendante reste sans effet. Réciproquement, si une unité (2) est connectée sur le canal indépendant (13), une tentative de connexion sur le canal normal par la carte (8) de commande reste sans effet.

## TABLEAU 1

| REFERENCE | ACTION CORRESPONDANTE |
|-----------|----------------------|
| 19 | RESET (interrupteur poussoir P1 appuyé) |
| 20 | Action sur l'interrupteur de la carte (8) de commande correspondant à la carte (10) de multiplexage d'unité concernée en vue d'une connexion ou déconnexion logique |
| 21 | Action sur l'interrupteur poussoir action P2 de la carte (8) de commande |
| 22 | Action sur l'interrupteur poussoir logique P4, le numéro affiché sur la roue codeuse de la carte (8) de commande étant égal au numéro de l'unité (2) correspondant à la carte (10) de multiplexage d'unité |
| 23 | Interrupteur poussoir logique P4 relâché |
| 24 | Action sur un interrupteur de la carte (8) de commande correspondant à une autre carte (10) de multiplexage d'unité |
| 25 | Action sur la roue codeuse de la carte (11) de connexion indépendante |
| 26 | Action 21 lorsque le numéro affiché sur la roue codeuse de la carte (11) de connexion indépendante est égal au numéro de la carte (10) de multiplexage d'unité |

| 27 | Action 21 lorsque le numéro affiché sur la roue codeuse de la carte(11)de connexion indépendante est différent du numéro de la carte(10)de multiplexage d'unité |
|----|----|
| 28 | Affichage du numéro de la carte (10) de multiplexage d'unité sur la roue codeuse de la carte(11)de connexion indépendante |
| 29 | Suppression de l'affichage du numéro de la carte (10)de multiplexage d'unité sur la roue codeuse de la carte(11)de connexion indépendante |
| 30 | Action sur l'interrupteur poussoir action P6 de la carte(11)de connexion indépendante |

La déconnexion logique d'une carte (10) de multiplexage d'unité se fait par coupure des tensions d'alimentation des émetteurs/ récepteurs d'interface de cette carte (10), notamment par coupure du +12V et -12V, qui eux-mêmes génèrent le +5V et -5V grâce à des régulateurs. On utilise avantageusement pour celà des transistors de puissance.

La tension à la sortie des régulateurs fournissant les tensions +5V et -5V alimentant les émetteurs/récepteurs est contrôlée par un montage à base de transistors qui génère un signal d'erreur sur la carte (9) de multiplexage de bus qui elle, émet le signal ERREUR allumant un voyant de la carte de commande (8), lorsqu'un défaut est détecté. Lorsque l'unité (2) de mémoire est volontairement déconnectée, le signal d'erreur est invalidé avant la coupure de la tension.

Une fois que la carte (10) de multiplexage d'unité que l'on veut déconnecter est reconnue, (que ce soit à partir de la carte (8) de commande ou de la carte (11) de connexion indépendante), l'operateur devra actionner un poussoir d'action (P2 pour la carte (8) de commande, et P6 pour la carte (11) de connexion indépendante), pour valider la commande de déconnexion. Quand cette commande provient de la carte (11) de connexion indépendante, les émetteurs/récepteurs d'interface de la carte (10) de multiplexage d'unité sont mis hors tension immédiatement. Si par contre, elle provient de la carte (8) de commande, deux cas peuvent se présenter :
– l'unité (2) que l'on veut déconnecter est libre ou va se libérer (c'est à dire un signal USLCTD est haut ou va monter). Dans ce cas, la mise hors tension se produit immédiatement.
– l'unité (2) est sélectionnée par le contrôleur (3). Si au bout d'environ 8 secondes cette unité (2) n'est pas libérée, la mise hors tension des émetteurs/récepteurs d'interface de la carte 10 de multiplexage d'unité intervient. Pour cela, la commande est resynchronisée deux fois sur l'horloge CLCK issue de la carte (9) de multiplexage de bus, émise sur le bus (7) de fond de panier.

Quand le signal qui invalide les émetteurs/récepteurs d'interface de la carte (10) de multiplexage d'unité est activé, le voyant lumineux de cette carte signifiant que les émetteurs/récepteurs d'interface sont sous tension et interdisant le débranchement des câbles, s'arrête de clignoter et s'éteint.

Un dispositif (1) selon l'invention comporte avantageusement des moyens de contrôle des tensions continues d'alimentation électrique, et des moyens d'émission permanente du signal RESET de réinitialisation, actifs lorsqu'un défaut est détecté sur une tension continue.

Un dispositif (1) selon l'invention peut être télécommandé par un à quatre dispositif extérieurs (par exemple le contrôleur (3) lorsque la clé est en position télécommandé. Cette télécommande s'effectue par transport d'une tension continue, par exemple de l'ordre de 5V, à partir du dispositif extérieur par un câble (32). Le dispositif 1 peut également télécommander au moins un autre dispositif extérieur par transport dune tension continue.

Un dispositif (1)comporte des moyens de mise en rotation en chaîne des unités de mémoire qui lui sont connectées. Ces moyens émettent deux signaux de télécommande vers les unités (2) de mémoire : le signal PICK de commande de mise en rotation en chaîne des unités de mémoire et le signal HOLD de validation du signal précédent. Ces deux signaux sont émis directement sur le bus (7) de fond de panier. Il n'est pas nécessaire de les porter sur les dispositifs émetteurs/récepteurs. Quant une carte (10) de multiplexage d'unité reçoit le signal PICK envoyé par la carte (9) de multiplexage de bus, une impulsion est générée pour charger le numéro imposé par le bus (7) de fond de panier à la carte (10) de multiplexage d'unité dans un compteur. Si ce numéro est 0, un signal est positionné pour mettre un relai dans la position de travail. Le signal PICK est alors envoyé à l'unité (2) de mémoire. Si par contre le numéro de la carte (10) de multiplexage d'unité est différent de 0, à chaque coupe d'horloge (environ toutes les 16 secondes), le compteur est décrémenté. Quand il prendra la valeur 0, un signal est envoyé pour mettre le relai dans la position travail. De plus, à chaque fois q'une unité (2) est déconnectée vis à vis de la carte de commande (8), elle s'arrête car le signal PICK qui lui est envoyé sera inactif.

Si l'unité (2) de mémoire est connectée sur le canal indépendant (13) via la carte (11) de connection indépendante, il démarrera dès que la liaison est validée, puiqu'une seule unité peut être connectée au canal indépendant (13) à un instant donné.

De plus, si les unités (2) de mémoire ne sont pas en position de de télécommande, ce démarrage séquentiel généré par le dispositif selon l'invention sera sans effet.

Le signal HOLD envoyé à l'unité (2) pour l'arrêter quand le dispositif (1) est télécommandé est positionné par un relai, lui-même commandé par le "ou logique" des signaux HOLD émis par les deux canaux quand ils sont valides.

Un signal de défaut de câble OCD est émis vers l'unité (2) de mémoire quand les signaux OCD du canal normal ou OCDV du canal indépendant sont émis sur le bus (7) de fond de panier.

La carte (9) de multiplexage de bus comporte la logique des moyens de connexion/déconnexion des unités (2) de mémoire. Cette carte (9) constitue l'interface entre la carte (8) de commande et les cartes (10) de multiplexage d'unité. Elle est reliée à la carte (8) de commande par câble (31) à soixante points dont les signaux sont explicités par le tableau 2, au bus (7) de fond de panier, et au câble A de commande en provenance du contrôleur (3). Les informations POUS et LOG en provenance respectivement du poussoir action P2 et du poussoir logique P4 de la carte (8) de commande sont destinées à la déconnexion des unités (2) de commande et sont réémises sur le bus (7) de fond de panier, vers les cartes (10) de multiplexage d'unité. Le signal RESET provenant de la carte (8) de commande est utilisé par la carte (9) de multiplexage de bus pour réinitialiser ses fonctions et est réémis vers les cartes (10, 11) connectées au bus (7). Les signaux SWIO à SWI15 donnent l'état des interrupteurs à deux positions de la carte (8) de commande. La carte (9) de multiplexage de bus effectue le multiplexage de ces signaux SWI en un signal DISC émis sur le bus (7) de fond de panier avec le numéro de l'unité (2) correspondant.

TABLEAU 2

| POINT | INFORMATION | POINT | INFORMATION |
|-------|-------------|-------|-------------|
| 1 | OV | 31 | OV |
| 2 | +5V | 32 | +5V |
| 3 | +5V | 33 | +5V |
| 4 | OV | 34 | OV |
| 5 | LED0 | 35 | RESET |
| 6 | LED1 | 36 | OV |
| 7 | LED2 | 37 | LED3 |
| 8 | OV | 38 | LED4 |
| 9 | LED6 | 39 | LED5 |
| 10 | LED7 | 40 | OV |
| 11 | LED8 | 41 | LED9 |
| 12 | OV | 42 | LED10 |
| 13 | LED12 | 43 | LED11 |
| 15 | LED14 | 45 | LED15 |

| POINT | INFORMATION | POINT | INFORMATION |
|-------|-------------|-------|-------------|
| 16 | OV | 46 | ERREUR |
| 17 | MARCHE | 47 | ATTENT |
| 18 | RZ FAULT | 48 | OV |
| 19 | LOG | 49 | POUS |
| 20 | SWI1 | 50 | SWIO |
| 21 | SWI2 | 51 | SWI3 |
| 22 | SWI5 | 52 | SWI4 |
| 23 | SWI6 | 53 | SWI7 |
| 24 | SWI9 | 54 | SWI8 |
| 25 | SWI10 | 55 | SWI11 |
| 26 | SWI13 | 56 | SWI12 |
| 27 | SWI14 | 57 | SWI15 |
| 28 | OV | 58 | OV |
| 29 | -12V | 59 | +12V |
| 30 | OV | 60 | OV |

La carte (9) de multiplexage de bus parcourt en permanence le bus (7) à l'aide d'une ligne à retard utilisée comme une horloge, et d'un compteur. Le signal DISC donne l'état de l'interrupteur dont le numéro est identique à celui codé sur le bus NUM, sur lequel figure le numéro de l'unité (2) correspondant, ou le numéro de la carte (10) de multiplexage lorsque le signal LOG est inactif correspondant au poussoir P4 relaché.

Ces signaux NUM et DISC émis sur le bus (7) de fond de panier par la carte (9) de multiplexage de bus sont synchronisés sur un signal STROBE qui est aussi émis vers les cartes (10) de multiplexage d'unité.

La carte (9) de multiplexage mémorise dans une bascule le "ou logique" des signaux de faute des unités (2) de mémoire. Lorsque l'on actionne le poussoir P3 de remise à zéro, la carte (8) de commande émet le signal RZ FAULT permettant de réinitialiser cette bascule.

D'autre part, la carte (9) de multiplexage envoie vers la carte (8) de commande tous les signaux LED, ATTENT, ERREUR, MARCHE commandant les voyants visibles en permanence de cette carte (8) de commande. Ces signaux sont le "ou logique" de la signification réelle du voyant et du signal RESET.

Chaque carte (10) de multiplexage d'unité émet vers la carte (9) de multiplexage de bus un signal d'activité de l'unité (2) qui lui est associé. La carte (9) de multiplexage de bus rassemble ces informations et les émet sur le bus LED vers la carte (8) de commande pour les voyants lumineux correspondants.

Le signal MARCHE est émis lorsque la carte (9) de multiplexage détecte la présence d'une tension continue, par exemple celle de l'order de +5V.

Le signal ERREUR est le "ou logique" des défauts de tension des diverses cartes (9 ,10, 11) connectées au bus (7).

Un dispositif selon l'invention comporte des moyens de détection du fait que deux unités (2) de mémoire tentent simultanément d'accéder au bus (7) via leur carte (10) de multiplexage associée, ces moyens de détection déclenchant d'une part des moyens de déconnexion automatique de ces unités (2) si un tel cas se présente et d'autre part des moyens de visualisation de cette erreur.

Lorsque deux cartes (10) de multiplexage d'unité tentent d'accéder simultanément sur le bus (7) la carte (9) de multiplexage de bus émet le signal ATTENT en permanence. Ce signal ATTENT est émis de façon intermittente pour faire clignoter le voyant d'attention lorqu'une faute d'unité (2) de mémoire est mémorisée.

De plus, la carte (9) de multiplexage de bus effectue une surveillance des unités (2) connectées sur les différentes cartes (10) de multiplexage d'unité ainsi que de ces cartes (10) de multiplexage d'unité elle-même. En effet, si deux unités (2) connectées sur le dispositif (1) portent le même numéro, quand le contrôleur va vouloir sélectionner l'unité (2) portant ce numéro, les deux cartes (10) de multiplexage associées à ces deux unités vont vouloir se réserver le bus (7) de fond de panier. Si de plus le contrôleur (3) demande une lecture sur cette unité (2), les deux cartes (10) de multiplexage d'unité vont vouloir être émettrices simultanément, ce qui peut être néfaste pour leur dispositif émetteur. C'est pourquoi, la carte (9) de multiplexage de bus vérifie qu'une seule carte (10) de multiplexage (10) d'unité demande le bus (7) de fond de panier. Quand le contrôleur (3) renvoie une sélection d'unité via la carte (9) de multiplexage de bus, le ou les unités sélectionnées répondent par le signal USLCTD. Ce signal est émis par les cartes (10) de multiplexage d'unité par un émetteur à collecteur ouvert, à travers une résistance, par exemple de l'ordre de 390 OHMS. Ainsi, si une seule carte (10) de multiplexage d'unité émet le signal USLCTD simultanément, la tension d'un signal MULSEL est à une valeur donnée, par exemple voisine de 2,5V, alors que si deux cartes (10) de multiplexage d'unité se reconnaissent, la tension du signal MULSEL est inférieure à la valeur prédédante, et par exemple est voisine de 1,7 V. Le signal MULSEL arrive sur l'une des entrées d'un amplificateur opérationnel (par exemple du type LM339) monté en comparateur. Afin d'éviter tout risque de parasites la sortie de ce comparateur doit rester stable pendant une cinquantaine de nanosecondes pour que la carte (9) de multiplexage de bus signale que deux unités (2) portent le même numéro. De plus, cette carte (9) de multiplexage de bus positionne alors le signal DESEL sur le bus (7) de fond de panier, afin que les deux cartes (10) de multiplexage d'unité concernées libèrent le bus (7.)

En plus de cette surveillance de cartes (10) de multiplexage d'unité, la carte (9) de multiplexage de bus surveille l'activité des unités (2) à l'aide de trois voyants lumineux. Le premier de ses voyants lumineux s'allume quand une des unités (2) est sélectionnée. Le deuxième voyant lumineux s'allume quand l'unité (2) sélectionnée effectue une lecture ou une écriture. Le dernier voyant lumineux s'allume quand l'unité (2) sélectionnée effectue un positionnement de tête. Chaque carte (10) de multiplexage d'unité est chargée de transmettre à la carte (9) de multiplexage de bus l'activité de l'unité (2) qui lui est associée. Cette fonction est réalisée à l'aide de deux démultiplexeurs dont les sorties sont en collecteur ouvert. Quand l'unité (2) effectue une opération (lecture ou écriture ou positionnement), seule la sortie correspondant au numéro porté par l'unité (2) sera au niveau logique actif. Quand l'unité (2) est inactive, toutes les sorties sont au niveau logique inactif. De plus, pour signaler à la carte (9) de multiplexage de bus que l'unité (2) qui lui est connectée est sélectionnée, la carte (10) de multiplexage d'unité positionne deux signaux sur le bus (7) de fond de panier :

– le signal USLCTD; la carte (9) de multiplexage de bus fera le "ou logique" de toutes les sélections d'unités (2) de bus grâce à ce signal

– le signal MULSEL; la carte (9) de multiplexage de bus utilise ce signal pour savoir si plusieurs unités (2) sont sélectionnées simultanément du fait qu'elles portent le même numéro.

La carte (9) de multiplexage de bus d'un dispositif (1) selon l'invention comporte des moyens d'horloge fournissant un signal d'horloge de base pour le dispositif (1). La période de ce signal d'horloge est d'environ une demi seconde. Ce signal d'horloge est utilisé par toutes les cartes (10) de multiplexage d'unité pour faire clignoter un voyant lumineux. Un autre signal d'horloge, dont la période est environ quatre fois celle de la précédente, est utilisé par toutes les cartes (10) de multiplexage d'unité pour calculer un temps d'inaction maximum assez grand.

Tous les signaux du câble A de commande (4) issus du contrôleur (3) sont renvoyés sur le bus (7) de fond de panier. Les dispositifs récepteurs sont toujours validés. Comme ces dispositifs ont des sorties en collecteur ouvert, il est nécessaire de ramener ces sorties au +5V par des résistances, notamment des résistances de l'ordre de 390 OHMS.

Les signaux destinés au contrôleur (3) sont envoyés sur le câble par des dispositifs émetteurs toujours validés.

Les récepteurs d'interface de câble B à haute vitesse de transmission (5) sont toujours validés sur la carte (10) de multiplexage d'unité quand celle-ci est vue d'un des deux canaux (canal indépendant (13), ou canal normal du contrôleur (3)). Les récepteurs d'interface de câble B à haute vitesse de transmission (5) sur la carte (11) de connexion indépendante sont validés quel que soit l'état de la carte (10) de multiplexage d'unités. Tous les signaux à la sortie des récepteurs sont ramenés au +5V par des résistances, par exemple de 390 OHMS, car ces récepteurs ont des sorties en collecteur ouvert. La plupart de ces signaux sont directement envoyés sur le bus (7) de fond de panier vers la carte (11) de connexion indépendante via un dispositif émetteur validé quand la carte (10) de multiplexage d'unité est vue du canal indépendant (13).

Les signaux de données en écriture WRDATA et de données RDDATA sont resynchronisés sur deux horlorges (respectivement WRCLK et RDCLK) avant d'être réémis sur le câble B à haute vitesse de transmission (5) correspondant. En réception, chaque signal est resynchronisé sur le front montant de son horloge, alors qu'il l'est sur le front descendant en émission.

Ainsi, le dispositif (1) selon l'invention est totalement transparent vis à vis des signaux véhiculés par les câbles B à haute vitesse de transmission (5).

Tous les signaux du câble A de commande (4) sont réémis sur le bus (7) de fond de panier ou proviennent de ce bus (7). Les signaux peuvent être validés sur deux bus constituant le bus (7) de fond de panier: un bus de canal normal entre la carte (9) de multiplexage de bus et les cartes (10) de multiplexage d'unité, et un bus de canal indépendant entre la carte (11) de connexion indépendante et les cartes (10) de multiplexage d'unité. Les signaux reçus de l'unité (2) ne peuvent être validés sur l'un des deux bus que si les deux conditions suivantes sont réalisées :

– la carte (10) de multiplexage d'unité est vue de la carte (9) de multiplexage de bus ou de la carte (11) de connexion indépendante ;

– l'unité (2) connectée sur cette carte (10) de multiplexage d'unité est sélectionnée par la carte (9) de multiplexage de bus ou la carte (11) de connexion indépendante.

Si de plus le signal DESEL est envoyé par la carte (9) de multiplexage de bus (qui indique que deux cartes (10) de multiplexage d'unité veulent émettre sur le bus d'accés à la carte (9) de multiplexage de bus) les émetteurs sur le bus (7) de fond de panier sont alors invalidés, pour éviter que ces émetteurs sur les deux cartes (10) émettrices soient endommagés.

Les récepteurs recevant les signaux du bus (7) de fond de panier destinés aux unités (2) sont validés dès que la carte (10) de multiplexage d'unité est vue d'un des deux canaux. Les émetteurs/récepteurs d'interfaces de l'unité (2) correspondante sont alors validés en permanence.

Les signaux véhiculés par le bus (7) de fond de panier sont explicités par le tableau 3. Dans le mode de réalisation préférentiel de l'invention, chacun des deux bus constituant le bus (7) de fond de panier comporte deux fois quarante trois points.Outre l'alimentation électrique (0v,5v,+12v, -12v), les bus de canal normal et de canal indépendant véhiculent cent treize signaux. Des lignes à 0v sont intercalées avantageusement entre certains points pour éviter les interférences.

TABLEAU 3

| CANAL NORMAL | | NUMERO DE POINT | CANAL INDEPENDANT | |
|---|---|---|---|---|
| +5V | +5V | 1 | OV | MSPHYO |
| +5V | +5V | 2 | MSPHY1 | MSPHY2 |
| OV | OV | 3 | OV | MSPHY3 |
| OV | BIT1D | 4 | STROBE | DISC |
| OV | OV | 5 | OV | BITV10 |
| BITO | BIT1 | 6 | BITVO | BITV1 |
| OV | BIT2 | 7 | OV | BITV2 |
| BIT3 | BIT4 | 8 | BITV3 | BITV4 |
| OV | BIT5 | 9 | OV | BITV5 |
| BIT6 | BIT7 | 10 | BITV6 | BITV7 |

13

| | | | | |
|---|---|---|---|---|
| OV | BIT8 | 11 | OV | BITV8 |
| BIT9 | USTAG | 12 | BITV9 | USTAGV |
| OV | TAG1 | 13 | OV | TAGV1 |
| TAG2 | TAG3 | 14 | TAGV2 | TAGV3 |
| OV | SELU0 | 15 | OV | SELUV0 |
| SELU1 | SELU2 | 16 | SELUV1 | SELUV2 |
| OV | SELU3 | 17 | OV | SELUV3 |
| NUM3 | NUM2 | 18 | NUMV0 | NUMV1 |
| OV | NUM1 | 19 | OV | NUMV2 |
| NUM0 | POUS | 20 | NUMV3 | POUSV |
| OV | BUSY | 21 | OV | BUSYV |
| INDEX | SECT | 22 | INDEXV | SECTV |
| OV | FAULT | 23 | OV | FAULTV |
| SEEKER | ONCYL | 24 | SEEKERV | ONCYLV |
| OV | URDY | 25 | OV | URDYV |
| AMF | WRPTCD | 26 | AMFV | WRPTCDV |
| OV | USLCTDB | 27 | OV | USLCTDV |
| PICKB | HOLDB | 28 | PICKV | HOLDV |
| OV | OCD | 29 | OV | OCDV |
| MULSEL | DESEL | 30 | RES1V | RES2V |
| OV | SEEKEND | 31 | OV | SEEKENV |
| RESET | CLFAULT | 32 | SERCLKV | RDCLKV |
| OV | ACTIV0 | 33 | OV | RDDATAV |
| ACTIV1 | ACTIV2 | 34 | WRCLK | WRDATA |
| OV | ACTIV3 | 35 | OV | BLINK |
| ACTIV6 | ACTIV5 | 36 | CLKC | ERRT |
| OV | ACTIV6 | 37 | OV | OV |
| ACTIV7 | ACTIV8 | 38 | LOG | OV |
| OV | ACTIV9 | 39 | OV | OV |
| ACTIV10 | ACTIV11 | 40 | ~12V | ~12V |
| OV | ACTIV12 | 41 | +12V | +12V |
| ACTIV13 | ACTIV14 | 42 | +5V | +5V |
| OV | ACTIV15 | 43 | +5V | +5V |

Les signaux BITO à BIT9 de bus, TAG1 à TAG3 de validation, SELUO à SELU3 de numéro d'unité sélectionnée, USTAG de validation, BUSY dunité occupée, sélectionnée, INDEX et SECT de top tour et top secteur, FAULT de faute, SEEKER d'erreur de positionnement, ONCYL de positionnement, URDY d'unité prête, WRPTCD d'écriture interdite, AMF de repère d'adresse trouvé, USLCTD d'unité sélectionnée, SEEKEND de fin de posiutionnement, correspondent aux signaux de l'interface soixante points standart sur le bus de canal normal. Ce bus comporte également les signaux les signaux NUM0 à NUM3, POUS, PICK, HOLD, OCD, MUL-SEL, DESEL, RESET précités, ACTIV0 à ACTIV16 correspondant aux voyants visibles de la carte (8) de commande qui indiquent l'activité des unités (2) (lecture, écriture, positionnement) et CLFAULT émis par le poussoir P3 d'annulation de faute.

Les signaux de même nom terminés du V concernent le canal indépendant (13). Sur le bus de canal indépendant, figurent également les signaux du câble B à haute vitesse de transmission: RES1V et RES2V de lignes réservées, SEEKENV de fin de positionnement, SERCLKV d'horloge pilote, RDCLKV et WRCLK d'horloge en lecture et écriture, RDDATAV et WRDATA de donnée en lecture et écriture. Ces signaux sont en effet nécessaires si l'on veut par exemple tester l'unité (2) connectée au canal indépendant (13).

Le bus MSPHYØ à MSPHY3 impose les numéros aux cartes (10) de multiplexage d'unités selon l'emplacement ou elles sont connectées physiquement au bus (7) de fond de panier.

Enfin, le bus (7) de fond de panier comporte le signal BLINK faisant clignoter le voyant (14) d'interdiction de débranchement, ERRT d'erreur de tension sur une carte (10) de multiplexage, STROBE de synchronisation des signaux du bus qui est envoyé à toutes les cartes (10) de multiplexage d'unité et LOG, DISC, MSPHY0 à MSPHY3 précités.

## Revendications

1. Dispositif (1,7,8,9,10) connecté entre un ensemble informatique et des unités (2) de mémoires auxiliaires permettant de relier ces unités (2) de mémoires à l'ensemble informatique, notamment à au moins un contrôleur (3) d'unités de cet ensemble informatique, qui présente au moins un interface chaîné comprenant un câble A de commande (4) et un nombre de câbles B (5) à haute vitesse de transmission de données égal au nombre d'unités (2) susceptibles d'être connectées à un même interface chaîné, caractérisé en ce qu'il est connecté à l'ensemble informatique, notamment à un contrôleur (3), par ledit interface chaîné comprenant ledit câble A et lesdits câbles B, en ce que chaque unité (2) de mémoires auxiliaires est reliée au dispositif (1) par un câble A de commande (4) et un câble B de données (5) propres à cette unité (2), et en ce qu'il comporte des moyens (7,8,9,10) logiques pour déconnecter ou connecter électriquement de ou à l'ensemble informatique chaque unité (2) de mémoire auxiliaire reliable au dispositif (1), sans perturber le fonctionnement des autres unités (2) de mémoires auxiliaires, notamment de celles reliées au même contrôleur (3).

2. Dispositif selon la revendication 1, caractérisé en ce qu'il comporte des moyens (9,10) de multiplexage des signaux du câble A de commande unique en provenance de l'interface de l'ensemble informatique en une pluralité de signaux pour les câbles A de commande (4) reliés respectivement à chaque unité (2) de mémoire auxiliaire.

3. Dispositif selon l'une quelconque des revendications 1 et 2, caractérisé en ce qu'il transmet sans modification les informations entre le câble B de données (5) de l'interface et les câbles B de données propres à chaque unité (2).

4. Dispositif selon l'une quelconque des revendications 1 à 3, caractérisé en ce qu'il comporte des moyens logiques pour connecter ou déconnecter électriquement sur au moins un canal indépendant (13) au moins une unité (2) de mémoire physiquement reliée au dispositif (1) par ses câbles (4, 5), sans perturber le fonctionnement des autres unités (2) de mémoire, notamment de celles reliées au même contrôleur (3), de façon que cette unité (2) de mémoire puisse être utilisée par des moyens de test, ou par un autre contrôleur (12).

5. Dispositif selon l'une quelconque des revendications 1 à 4, caractérisé en ce qu'il comporte un bus (7) de fond de panier véhiculant l'ensemble des informations, une carte (8) de commande, une carte (9) de multiplexage de bus (7) qui gère les informations véhiculées par ce bus (7), une carte (10) de multiplexage par unité (2) de mémoire auxiliaire qui gère la liaison entre cette unité (2) de mémoire et le bus (7) et qui assure la transparence des informations transmises par les câbles B à haute vitesse de transmission (5), et en option, une carte (11) de connexion à un canal indépendant, permettant notamment, l'utilisation de moyens de tests sur une unité (2) de mémoire auxiliaire.

6. Dispositif selon la revendication 5 caractérisé en ce qu'il comporte des moyens de reconnaissance de la carte (10) de multiplexage d'unité physiquement associée à une unité (2) de mémoire donnée, notamment constitués d'un poussoir logique P4 et d'au moins une roue codeuse de la carte de commande (8) sur laquelle on inscrit le numéro de l'unité (2) de mémoire, l'actionnement du poussoir P4 validant ce numéro d'unité sur les cartes (10) de multiplexage d'unité, la carte (10) de multiplexage d'unité connectée physiquement à l'unité (2) dont le numéro est codé se reconnaissant alors en émettant un signal qui allume un voyant (18) de reconnaissance sur cette carte 10 si l'unité (2) a été sélectionnée au moins une fois.

7. Dispositif selon l'une quelconque des revendications 5 et 6 caractérisé en ce que le câble A de commande (4) issu de l'ensemble informatique est connecté directement sur la carte (9) de multiplexage de bus, et/ou en ce que les câbles B à haute vitesse de transmission (5) issus de l'ensemble informatique sont connectés aux cartes (10) de multiplexage d'unité respectives.

8. Dispositif selon l'une quelconque des revendications 5 à 7, caractérisé en ce que la carte (8) de commande est connectée à la carte (9) de multiplexage de bus qui est elle-même connectée au bus (7) de fond de panier, et au câble A de commande (4) en provenance du contrôleur (3) de l'ensemble informatique.

9. Dispositif selon l'une quelconque des revendications 5 à 8, caractérisé en ce que la logique des moyens pour déconnecter/connecter chaque unité (2) de mémoire de/à l'ensemble informatique est supportée par la carte (9) de multiplexage de bus.

10. Dispositif selon l'une quelconque des revendications 5 à 9, caractérisé en ce qu'il comporte des moyens de détection de défaut d'alimentation électrique générale et/ou sur chacune des cartes (8,9,10,11) du dispositif (1).

11. Dispositif selon l'une quelconque des revendications 1 à 10, caractérisé en ce qu'il comporte des moyens de détection du fait que deux unités (2) de mémoire tentent simultanément d'accéder au bus (7) via leurs cartes (10) de multiplexage associées, les moyens de détection invalidant les moyens de connexion des cartes (10) de multiplexage d'unités au bus (7) de fond de panier (2) si un tel cas se présente, et déclenchant des moyens de visualisation de cette erreur.

12. Dispositif selon l'une quelconque des revendications 1 à 11, caractérisé en ce que les moyens logiques pour déconnecter/connecter chaque unité (2) de mémoire de/à l'ensemble informatique comportent d'une part un interrupteur à deux positions par carte (10) de multiplexage d'unité, et un poussoir d'action P2 validant la déconnexion ou la connexion logique de la carte (10) de multiplexage d'unité pour laquelle l'interrupteur a été préalablement basculé en coupant ou en rétablissant l'alimentation électrique des circuits émetteurs/récepteurs des câbles d'interface (4) et (5) de la carte (10) de multiplexage.

13. Dispositif selon l'une quelconque des revendications 1 à 12, caractérisé en ce que la carte (11) de connexion indépendante comporte au moins une roue codeuse et un interrupteur poussoir P6 d'actionnement qui déclenche la connexion de l'unité associée à la carte (10) de multiplexage d'unité dont le numéro est affiché sur la roue codeuse, sur le canal indépendant (13) associé à cette carte (11) de connexion indépendante.

14. Dispositif selon l'une quelconque des revendications 1 à 13 caractérisé en ce qu'il comporte des moyens permettant de le télécommander à partir du contrôleur (3), ou de télécommander d'autres dispositifs.

15. Dispositif selon l'une quelconque des revendications 1 à 14, caractérisé en ce qu'il comporte des moyens permettant de visualiser l'activité de chaque unité (2) de mémoire (lecture, écriture, positionnement des têtes), notamment un voyant lumineux de la carte (8) de commande par unité (2) de mémoire.

## Patentansprüche

1. Einschaltvorrichtung (1,7,8,9,10) zwischen einem Datenverarbeitungssystem und Zusatzspeichereinheiten (2), um die Zusatzspeicher (2) mit dem Datenverarbeitungssystem, insbesondere einem Einheitencontroller (3) dieses Datenverarbeitungssystems zu verbinden, welcher zumindest eine Verkettungs-Schnittstelle mit einem Kabel A zur Steuerung (4) und eine Mehrzahl von Kabeln B (5) zur Datenübertragung mit hoher Geschwindigkeit entsprechend der Anzahl der an eine Schnittstellenkette anschließbaren Einheiten (2), aufweist, dadurch gekennzeichnet, daß sie mit dem Datenverarbeitungssystem, insbesondere einem Controller (3) über die Verkettungs-Schnittstelle mit dem Kabel A und den Kabeln B verbunden ist, daß jede Zusatzspeichereinheit (2) über ein Steuerkabel A (4) und ein Kabel B für Daten (5) dieser Einheit (2) mit der Vorrichtung (1) verbunden ist, und daß Logikeinheiten (7,8,9,10) zum elektrischen An- bzw. Abkoppeln jeder mit der Vorrichtung (1) verbindbaren Zusatzspeichereinheit (2) an das bzw. von dem Datenverarbeitungssystem vorgesehen sind, ohne die Funktion der anderen Zusatzspeichereinheiten (2), vor allem jener, die an demselben Controller (3) angeschlossen sind, zu stören.

2. Vorrichtung nach Anspruch 1, dadurch gekennzeichnet, daß Einrichtungen (9,10) zum Multiplexen von Signalen vom einzelnen Steuerkabel A, die von der Schnittstelle des Datenverarbeitungssystems kommen, in eine Vielzahl von Signalen für die Kabel A zur Steuerung (4), die jeweils mit jeder Zusatzspeichereinheit verbunden sind, vorgesehen sind.

3. Vorrichtung nach Anspruch 1 oder 2, dadurch gekennzeichnet, daß sie die Informationen ohne Veränderung zwischen dem Kabel B für die Daten (5) der Schnittstelle und den Datenkabeln B jeder Einheit (2) überträgt.

4. Vorrichtung nach einem der Ansprüche 1 bis 3, dadurch gekennzeichnet, daß sie Logikschaltungen zum elektrischen An-bzw. Abkoppeln von zumindest einer physisch über ihre Kabel (4,5) mit der Vorrichtung (1) verbundenen Speichereinheit (2) über zumindest einen unabhängigen Kanal (13) aufweist, ohne die Funktion der anderen Speichereinheiten (2), vor allem jener, die an denselben Controller (3) angeschlossen sind, zu

EP 0 246 168 B1

stören, sodaß diese Speichereinheit (2) durch Testvorrichtungen oder einen anderen Controller (12) verwendbar ist.

5. Vorrichtung nach einem der Ansprüche 1 bis 4, gekennzeichnet durch einen Bus (7) mit korbbodenartiger Sammelstruktur, der sämtliche Daten fördert, eine Steuerkarte (8), eine Multiplexerkarte (9) für den Bus (7), welche die durch diesen Bus (7) geförderten Daten lenkt, eine Multiplexerkarte (10) für jede Zusatzspeichereinheit (2), welche die Verbindung zwischen dieser Speichereinheit (2) und dem Bus (7) steuert und die Transparenz der von den Kabeln (5) für hohe Übertragungsgeschwindigkeit übertragenen Informationen sichert, und wahlweise durch eine Karte (11) für den Anschluß an einen unabhängigen Kanal, welche insbesondere die Verwendung von Testvorrichtungen an einer Zusatzspeichereinheit (2) ermöglicht.

6. Vorrichtung nach Anspruch 5, dadurch gekennzeichnet, daß Einrichtungen zum Erkennen der Multiplexerkarte (10) einer physisch mit einer vorhandenen Speichereinheit (2) verbundenen Einheit vorgesehen sind, welche aus einem logischen Druckknopf P4 und zumindest einem Kodierrad für die Steuerkarte (8), auf der die Nummer der Speichereinheit (2) eingeschrieben wird, bestehen, wobei die Betätigung des Druckknopfes P4 diese Einheitsnummer auf den Multiplexerkarten (10) der Einheit validiert und die Multiplexerkarte (10) der Einheit, die physisch mit der Einheit (2) mit kodierter Nummer verbunden ist, erkennt man somit durch Aussenden eines Signals, welches eine Anzeigeeinrichtung (18) auf dieser Karte (10) zum Aufleuchten bringt, wenn die Einheit (2) zumindest einmal ausgewählt wurde.

7. Vorrichtung nach Anspruch 5 oder 6, dadurch gekennzeichnet, daß das vom Datenverarbeitungssystem kommende Kabel A zur Steuerung (4) direkt an die Bus-Multiplexerkarte (9) angeschlossen ist und/oder daß die vom Datenverarbeitungssystem ausgehenden Kabeln B für hohe Übertragungsgeschwindigkeiten (5) jeweils an die Multiplexerkarten (10) der betreffenden Einheit angeschlossen sind.

8. Vorrichtung nach einem der Ansprüche 5 bis 7, dadurch gekennzeichnet, daß die Steuerkarte (8) an die Bus-Multiplexerkarte (9) angeschlossen ist, welche ihrerseits an den Bus (7) mit korbbodenartiger Sammelstruktur und an das vom Controller (3) des Datenverarbeitungssystems kommende Kabel A zur Steuerung (4) angeschlossen ist.

9. Vorrichtung nach einem der Ansprüche 5 bis 8, dadurch gekennzeichnet, daß die Logik der Einrichtungen zum An- bzw. Wegschalten jeder Speichereinheit an das bzw. vom Datenverarbeitungssystem von der Bus-Multiplexerkarte (9) geliefert wird.

10. , Vorrichtung nach einem der Ansprüche 5 bis 9, dadurch gekennzeichnet, daß Einrichtungen zur Erfassung von Störungen in der allgemeinen elektrischen Versorgung und(oder in jener der Karten (8,9,10,11) der Vorrichtung (1) vorgesehen sind.

11. Vorrichtung nach einem der Ansprüche 1 bis 10, dadurch gekennzeichnet, daß Einrichtungen vorgesehen sind, welche ermitteln, ob zwei Speichereinheiten (2) über ihre angeschlossenen Multiplexerkarten (10) gleichzeitig auf den Bus (7) zugreifen möchten und in einem solchen Fall die Anschlußeinrichtungen der Multiplexerkarten (10) dieser Einheiten an den Bus (7) mit korbbodenartiger Sammelstruktur (2) invalidieren und die Anzeigeeinrichtungen für diesen Fehler auslösen.

12. Vorrichtung nach einem der Ansprüche 1 bis 11, dadurch gekennzeichnet, daß die logischen Einrichtungen zum An- bzw. Abkoppeln jeder Speichereinheit (2) an das bzw. vom Datenverarbeitungssystem einerseits pro Multiplexerkarte (10) der Einheit einen Schalter mit zwei Stellungen und einen Druckknopf zur Betätigung (P2), welcher die logische An- oder Abschaltung der Multiplexerkarte (10) jener Einheit validiert, für die der Schalter zuvor umgeschaltet wurde und somit die elektrische Versorgung der Sende/Empfangsschaltungen der Schnittstellenkabeln (4) und (5) der Multiplexerkarte (10) abgetrennt oder wiederangeschaltet hat.

13. Vorrichtung nach einem der Ansprüche 1 bis 12, dadurch gekennzeichnet, daß die unabhängige Anschlußkarte (11) zumindest ein Kodierrad und einen Druckschalter P6 zur Betätigung aufweist, welcher die Verbindung jener mit der Multiplexerkarte (10) verbundenen Einheit, deren Nummer auf dem Kodierrad angezeigt ist, mit dem zur unabhängigen Anschlußkarte (11) gehörenden unabhängigen Kanal (13) herstellt.

14. Vorrichtung nach einem der Ansprüche 11 bis 13, dadurch gekennzeichnet, daß Einrichtungen zur Fernsteuerung der Vorrichtung über den Controller (3) oder zur Fernsteuerung anderer Vorrichtungen vorgesehen sind.

15. Vorrichtung nach einem der Ansprüche 1 bis 14, dadurch gekennzeichnet, daß Einrichtungen zur Veranschaulichung der Aktivität jeder Speichereinheit (2) (Lesen, Schreiben, Kopfpositionierung), insbesondere eine Leuchtanzeige der Steuerkarte (8) pro Speichereinheit (2) vorgesehen sind.

## Claims

1. Device (1, 7, 8, 9, 10) connected between a data processing system and auxiliary memory units (2) allow-

17

ing these memory units (2) to be linked to the data processing system, in particular to at least one unit controller (3) of this data processing system, which presents at least one daisy chained interface comprising a control cable A (4) and a number of high speed data transmission cables B (5) equal to the number of units (2) which can be connected to a single daisy chained interface, characterised in that it is connected to the data processing system, in particular to a controller (3), by the said daisy chained interface comprising the said cable A and the said cables B, in that each auxiliary memory unit (2) is connected to the device (1) by a control cable A (4) and a data cable B (5) which belong to that unit (2), and in that it includes logical means (7, 8, 9, 10) of electrically disconnecting from or connecting to the data processing system each auxiliary memory unit (2) capable of being connected to the device (1), without disrupting the operation of the other auxiliary memory units (2), in particular those connected to the same controller (3).

2. Device as in claim 1, characterised in that it includes means (9, 10) of multiplexing the signals from the single control cable A coming from the interface of the data processing system into a plurality of signals for the control cables A (4) connected to each auxiliary memory unit (2) respectively.

3. Device as in any one of claims 1 and 2, characterised in that it transmits the information without alteration between the data cable B (5) of the interface and the data cables B belonging to each unit (2).

4. Device as in any one of claims 1 to 3, characterised in that it includes logical means of electrically connecting or disconnecting via at least one independent channel (13) at least one memory unit (2) physically connected to the device (1) by its cables (4, 5), without disrupting the operation of the other memory units (2), in particular those connected to the same controller (3), in such a way that this memory unit (2) can be used by test means or by another controller (12).

5. Device as in any one of claims 1 to 4, characterised in that it includes a backplane bus (7) which conveys all the information, a control card (8), a multiplexing card (9) for the bus (7) which controls the information conveyed by this bus (7), a multiplexing card (10) for each auxiliary memory unit (2) which controls the link between this memory unit (2) and the bus (7) and which ensures transparency of the information transmitted via the high speed transmission cables B (5), and optionally a card (11) for connection to an independent channel, in particular allowing test means to be used on an auxiliary memory unit (2).

6. Device as in claim 5, characterised in that it includes means of identifying the unit multiplexing card (10) physically associated with a given memory unit (2), formed in particular of a logical pushbutton P4 and at least one thumbwheel of the control card (8) on which the number of the memory unit (2) is recorded, the pressing of the pushbutton P4 confirming this unit number to the unit multiplexing cards (10) and the unit multiplexing card (10) physically connected to the unit (2) whose number was entered then identifying itself by emitting a signal which lights an identification lamp (18) on this card (10) if the unit (2) has been selected at least once.

7. Device as in any one of claims 5 and 6, characterised in that the control cable A (4) coming from the data processing system is directly connected to the bus multiplexing card (9), and/or in that the high speed transmission cables B (5) coming from the data processing system are connected to the respective unit multiplexing cards (10).

8. Device as in any one of claims 5 to 7, characterised in that the control card (8) is connected to the bus multiplexing card (9) which is itself connected to the backplane bus (7), and to the control cable A (4) coming from the controller (3) of the data processing system.

9. Device as in any one of claims 5 to 8, characterised in that the logic of the means of disconnecting/connecting each memory unit (2) from/to the data processing system is supported by the bus multiplexing card (9).

10. Device as in any one of claims 5 to 9, characterised in that it includes means of detecting a general electricity supply fault and/or an electricity supply fault on each of the cards (8, 9, 10, 11) of the device (1).

11. Device as in any one of claims 1 to 10, characterised in that it includes means of detecting the fact that two memory units (2) are simultaneously trying to access the bus (7) via their associated multiplexing cards (10), the detecting means invalidating the means of connecting the unit multiplexing cards (10) to the backplane (2) bus (7) if such a case arises, and triggering means of displaying this error.

12. Device as in any one of claims 1 to 11, characterised in that the logical means of disconnecting/connecting each memory unit (2) from/to the data processing system include a two-position switch for each unit multiplexing card (10) on the one hand and a latching pushbutton P2 which confirms the logical disconnection or connection of the unit multiplexing card (10) for which the switch has previously been operated by cutting or restoring the electricity supply of the transmitting/receiving circuits of the interface cables (4) and (5) of the multiplexing card (10).

13. Device as in any one of claims 1 to 12, characterised in that the independent connection card (11) includes at least one thumbwheel and one latching pushbutton switch P6 which triggers the connection of the unit associated with the unit multiplexing card (10) whose number is showing on the thumbwheel, and the independent channel (13) associated with this independent connection card (11).

14. Device as in any one of claims 1 to 13, characterised in that it includes means allowing it to be remotely controlled by the controller (3), or to remotely control other devices.

15. Device as in any one of claims 1 to 14, characterised in that it includes means allowing the activity of each memory unit (2) (reading, writing, positioning the heads) to be displayed, in particular a control card (8) indicator light for each memory unit (2).

FIG. 2

FIG.1

FIG.3

FIG.4